# EUROPÄISCHE PATENTANMELDUNG

(11) **EP 1 655 086 A1**
(43) Veröffentlichungstag der Anmeldung: **10.05.2006**
(21) Anmeldenummer: 04026255.2
(22) Anmeldetag: 05.11.2004
(51) Int. Cl.: B21D 43/20, B23Q 7/10, B23Q 7/14

(54) **Transportanlage und Transportverfahren zum Wegtransportieren von Werkstücken**

(71) Anmelder: GÜDEL GROUP AG, 4900 Langenthal (CH)
(72) Erfinder: Kurt, H.U., 4566 Kriegstetten (CH); Zulauf, Walter, 4937 Ursenbach (CH)
(74) Vertreter: Roshardt, Werner Alfred

(57) **Zusammenfassung**

Eine Transportanlage ist mit einer Werkstücktransporteinrichtung versehen, die einen Werkstückschlitten (12), eine Werkstückschlittenbahn (20), eine erste Entladeeinrichtung (31) und eine zweite Entladeeinrichtung (32) umfasst. Der Werkstückschlitten (12) ist zur Aufnahme und zum Transport wenigstens eines von einer Produktionsanlage (5) gefertigten Werkstücks (10) ausgebildet und entlang der Werkstückschlittenbahn (20) wahlweise zwischen einer Werkstückschlittenbeladeposition (24) und einer ersten oder einer zweiten Werkstückschlittenentladepositon (26,27) hin und her verfahrbar. Die Werkstückschlittenbeladeposition (24) ist in unmittelbarer Nähe der Produktionsanlage (5) die erste Werkstückschlittenentladeposition (26) weiter von der Produktionsanlage (5) weg und die zweite Werkstückschlittenentladeposition (27) noch weiter von der Produktionsanlage (5) weg angeordnet. Die erste Entladeeinrichtung (31) dient zum Entladen eines Werkstücks (10) vom Werkstückschlitten (12), der in der ersten Werkstückschlittenentladeposition (26) ist, während die zweite Entladeeinrichtung (32) zum Entladen eines Werkstücks (10) vom Werkstückschlitten (12) in der zweiten Werkstückschlittenentladeposition (27) dient. Die beiden Entladeeinrichtungen (31,32) können gleichzeitig und unabhängig voneinander betätigt werden. Ein Verfahren für den Betrieb dieser Transportanlage sowie eine Gestelltransportsteuerungsanlage und ein Computerprogramm zur Steuerung der Transportanlage werden ebenfalls beschrieben. Die Transportanlage hat eine verbesserte Leistungsfähigkeit, welche der Leistungsfähigkeit von modernen Produktionsanlagen angemessen ist.

## Beschreibung

### Technisches Gebiet

Die Erfindung betrifft eine Anlage und ein Verfahren zum Wegtransportieren von mittels einer Produktionsanlage gefertigten Werkstücken von der Produktionsanlage weg, wobei die Produktionsanlage z.B. eine Presse, insbesondere eine Grossteil-Stufenpresse, eine Pressenstrasse oder dergleichen sein kann.

### Stand der Technik

Im Zuge der technologischen Weiterentwicklung von Pressen für die Blechumformung, insbesondere Mehrstationenpressen der eingangs genannten Art, wie sie typischerweise für den Automobilbau verwendet werden, konnte die Produktivität der Pressen in den letzten Jahren beträchtlich gesteigert werden. Dies hatte zur Folge, dass die Produktionsgeschwindigkeit von Produktionsanlagen, welche solche Pressen umfassen, heutzutage häufig nicht mehr von der Produktionsgeschwindgkeit der eigentlichen Pressen begrenzt wird, sondern von der Geschwindigkeit, mit welcher die von den Pressen erzeugten Werkstücke bzw. Pressteile von den Pressen weg gefördert werden können.

Früher war es üblich, die von einer Presse erzeugten Pressteile entweder von Hand oder mittels Werkzeugen, die von einem Operateur individuell gesteuert wurden, von einer Entladestation der Presse zu entnehmen und für die Weiterverarbeitung von der Presse weg zu fördern.

Um die Wegförderung der Werkstücke von der Presse weg zu beschleunigen sind heutzutage auch Transportanlagen in Form von sogenannten Abstapelanlagen bekannt, bei denen dieser Wegförderprozess wenigstens teilweise automatisiert ist. So ist es z.B. bekannt, die von der Presse erzeugten Werkstücke auf ein Förderband abzulegen, welches die Werkstücke dann von der Presse weg fördert. Anschliessend werden mittels einer Videokamera Lage und Position der Werkstücke auf dem Förderband ermittelt und an einen Entladeroboter übertragen. Der Entladeroboter ergreift dann aufgrund der von der Videokamera empfangenen Lage- und Positionsdaten die Werkstücke, entnimmt sie vom Förderband und stapelt sie in einem geeigneten Werkstückbehälter ab, z.B. in einem Gestell. Sobald der Werkstückbehälter mit den von der Presse erzeugten Werkstücken gefüllt ist, wird er z.B. mittels eines Gabelstaplers oder eins Krans von der Abstapelanlage weg transportiert.

Bisher bekannte Transport- oder Abstapelanlagen sind nicht in der Lage, die von modernen Produktionsanlagen der oben genannten Art erzeugten Werkstücke mit einer ausreichend hohen Transportrate von der Produktionsanlage weg zu fördern.

### Darstellung der Erfindung

Aufgabe der Erfindung ist es, eine dem eingangs genannten technischen Gebiet zugehörende Transportanlage zu schaffen, welche eine modernen Pressen und anderen modernen Produktionsanlagen angemessene Transportrate ermöglicht.

Die Lösung der Aufgabe ist durch die Merkmale der unabhängigen Ansprüche definiert. Gemäss der Erfindung ist eine Transportanlage zum Wegtransportieren von Werkstücken, die mittels einer Produktionsanlage gefertigt worden sind, von der Produktionsanlage weg, mit einer Werkstücktransporteinrichtung versehen, die wenigstens folgende Komponenten umfasst:
a) einen Werkstückschlitten, der zur Aufnahme und zum Transport wenigstens eines der von der Produktionsanlage gefertigten Werkstücke ausgebildet ist,
b) eine längliche Werkstückschlittenbahn, entlang welcher der Werkstückschlitten wahlweise zwischen einer Werkstückschlittenbeladeposition und einer ersten Werkstückschlittenentladeposition sowie zwischen der Werkstückschlittenbeladeposition und einer zweiten Werkstückschlittenentladeposition hin und her verfahrbar ist,
c) eine erste Entladeeinrichtung zum Entladen eines Werkstücks vom Werkstückschlitten;
d) eine zweite Entladeeinrichtung zum Entladen eines Werkstücks vom Werkstückschlitten.

Die Werkstückschlittenbeladeposition ist in unmittelbarer Nähe der Produktionsanlage vorgesehen. Dadurch ist gewährleistet, dass der Werkstückschlitten, wenn er in der Werkstückschlittenbeladeposition angeordnet ist, direkt von einer Werkstückfördervorrichtung der Produktionsanlage mit von der Produktionsanlage gefertigten Werkstücken beladen werden kann. Die erste Werkstückschlittenentladeposition ist weiter von der Produktionsanlage entfernt vorgesehen als die Werkstückschlittenbeladeposition, um zu gewährleisten, dass die vom Werkstückschlitten entladenen Werkstücke den Betrieb der Produktionsanlage nicht stören und genügend Platz für die Zwischenlagerung dieser Werkstücke vorhanden ist. Aus den gleichen Gründen ist die zweite Werkstückschlittenentladeposition noch weiter von der Produktionsanlage entfernt vorgesehen als die erste Werkstückschlittenentladeposition.

Der Werkstückschlitten ist in der Werkstückschlittenbeladeposition mit wenigstens einem der von der Produktionsanlage gefertigten Werkstücke beladbar. Dieses kann anschliessend mittels des Werkstückschlittens von der Werkstückschlittenbeladeposition weg zur ersten oder zur zweiten Werkstückschlittenentladeposition transportiert werden, wobei die Richtung dieses Transports eine erste Werkstücktransportrichtung definiert.

Die erste Entladeeinrichtung ist in der Nähe der ersten Werkstückschlittenentladeposition angeordnet. Sie ist derart ausgebildet, dass mittels der ersten Entladeeinrichtung ein zuvor mittels des Werkstückschlittens von der Werkstückschlittenbeladeposition zur ersten Werkstückschlittenentladeposition transportiertes Werkstück von dem in die erste Werkstückschlittenentladeposition gefahrenen Werkstückschlitten entnommen und quer zur ersten Werkstücktransportrichtung vom Werkstückschlitten weg transportiert werden kann. In analoger Art ist die zweite Entladeeinrichtung in der Nähe der zweiten Werkstückschlittenentladeposition angeordnet und derart ausgebildet, dass ein zuvor mittels des Werkstückschlittens von der Werkstückschlittenbeladeposition zur zweiten Werkstückschlittenentladeposition transportiertes Werkstück von dem in die zweite Werkstückschlittenentladeposition gefahrenen Werkstückschlitten entnommen und quer zur ersten Werkstücktransportrichtung vom Werkstückschlitten weg transportiert werden kann. Die erste Entladeeinrichtung und die zweite Entladeeinrichtung sind in einer Distanz derart voneinander entfernt angeordnet, dass sie ohne Kollisionsgefahr gleichzeitig und unabhängig voneinander betätigt werden können.

Im vorliegenden Zusammenhang wird unter einer zweiten Richtung, die quer zu einer ersten Richtung verläuft, verstanden, dass die erste und die zweite Richtung nicht parallel sind. Die zweite Richtung kann rechtwinklig oder unter einem beliebigen anderen von 0 Grad abweichenden Winkel zur ersten Richtung verlaufen.

Weiter wird unter einem Schlitten im vorliegenden Zusammenhang stets ein Schlitten im Sinne der Maschinenbautechnik verstanden. Ein solcher Schlitten kann entweder zum Gleiten auf einer länglichen Führungsbahn ausgebildet sein, oder er kann mit Rädern, Rollen, Walzen o.ä. versehen sein, welche ein gleitfreies Fahren des Schlittens auf der Führungsbahn ermöglichen. Entsprechend bedeutet "ein auf einer Führungsbahn verfahrbarer Schlitten", dass der Schlitten auf der Führungsbahn entweder gleiten oder fahren kann.

Indem mit dem Werkstückschlitten Werkstücke, die von der Produktionsanlage gefertigt worden sind, abwechslungsweise zu zwei oder noch mehr verschiedenen Entladeeinrichtungen transportiert werden können, welche wenigstens teilweise gleichzeitig betrieben werden können, steht diesen mehr Zeit zur Verfügung, um die Werkstücke vom Schlitten zu entladen und anschliessend an geeigneten Stellen zu deponieren bzw. abzustapeln. Eine Mehrzahl von Entladeeinrichtungen können somit gleichzeitig quasi parallel zueinander arbeiten, um die von der Produktionsanlage gefertigten Werkstücke von der Produktionsanlage weg zu fördern. Dadurch wird die Leistungsfähigkeit der erfindungsgemässen Transportanlage wesentlich verbessert, so dass diese nun Schritt zu halten vermag mit der Leistungsfähigkeit bzw. der Produktionsrate von modernen Produktionsanlagen.

Vorzugsweise ist der Werkstückschlitten mit einer Werkstückhaltevorrichtung versehen, welche das mittels des Werkstückschlittens transportierte Werkstück während dem Transport von der Werkstückschlittenbeladeposition zur ersten oder zur zweiten Werkstückschlittenentladeposition bezüglich dem Werkstückschlitten lage- und positionsgenau festhält. Ein solcher Werkstückschlitten ist insgesamt zur Aufnahme eines Werkstücks und zum positions- sowie lagegenauen Halten des vom Werkstückschlitten aufgenommenen Werkstücks ausgebildet. Dadurch sind die Positions- und Lagedaten der Werkstücke in der Transportanlage jederzeit aufgrund der Positions- und Lagedaten der Werkstückschlitten bestimmbar. Zum automatischen Entladen der Werkstücke vom Werkstückschlitten sind deshalb keine Videokameras oder andere Positions- und Lagesensoren erforderlich, welche die Positions- und Lagedaten der Werkstücke auf dem Werkstückschlitten bestimmen.

Gemäss einer bevorzugten Ausführungsart der Erfindung ist der Werkstückschlitten derart ausgebildet, dass das Werkstück für den Transport mittels des Werkstückschlittens wahlweise in einer ersten oder in einer zweiten von wenigstens zwei verschiedenen Werkstückaufnahmepositionen vom Werkstückschlitten aufnehmbar ist, wobei die wenigstens zwei Werkstückaufnahmepositionen längs zur ersten Werkstücktransportrichtung zueinander versetzt sind. Ein solcher Werkstückschlitten erweist sich insbesondere als vorteilhaft in Verbindung mit einer Produktionsanlage, deren Werkstück-Ausgabevorrichtung, welche als letzte Station einer Werkstückförderanlage der Produktionsanlage die von der Produktionsanlage gefertigten Werkstücke von der Produktionsanlage ausgibt und auf den Werkstückschlitten lädt, zum Ausgeben des Werkstücks in verschiedenen wählbaren Abständen von der Produktionsanlage ausgebildet ist. Dadurch wird die Möglichkeit geschaffen, den Übergabepunkt, in welchem die Werkstücke von der Produktionsanlage an den Werkstückschlitten der Transportanlage übergeben werden, zu variieren. Dies kann zum Beispiel dazu benutzt werden, den zeitlichen Ablauf des Werkstücktransports mittels der erfindungsgemässen Transportanlage weiter zu optimieren. Der variable Übergabepunkt kann aber auch zu einer Verlängerung des Transporthubs verwendet werden, entlang welchem die Werkstücke mittels des Werkstückschlittens und der Werkstückschlittenbahn transportierbar sind.

Vorzugsweise ist wenigstens eine der Entladeeinrichtungen als Entladeroboter ausgebildet und an einem quer zur ersten Werkstücktransportrichtung angeordneten länglichen Träger angeordnet, an welchem der Entladeroboter in Trägerlängsrichtung über die Werkstückschlittenbahn hinweg verfahrbar ist, um ein zuvor mittels des Entladeroboters vom Werkstückschlitten entnommenes Werkstück quer zur ersten Werkstücktransportrichtung vom Werkstückschlitten weg zu transportieren. Durch den quer über die Werkstückschlittenbahn verlaufenden Träger wird die Möglichkeit geschaffen, die Werkstücke wahlweise auf zwei einander in Bezug auf die Werkstückschlittenbahn gegenüberliegende Seiten zu transportieren.

Gemäss einer vorteilhaften Variante der Erfindung umfasst die Werkstücktransporteinrichtung einen zusätzlichen Werkstückschlitten, der entlang einer zusätzlichen, zur ersten Werkstückschlittenbahn parallelen Werkstückschlittenbahn verfahrbar ist, wobei die beiden Werkstückschlitten wahlweise entweder synchron zueinander oder unabhängig voneinander verfahrbar sind. Im synchronen Betrieb können die beiden Werkstückschlitten ein einziges Werkstück gemeinsam transportieren, was vorteilhaft sein kann im Falle von sehr grossen Werkstücken. Im unabhängigen Betrieb können die beiden parallel verfahrbaren Werkstückschlitten jeweils zwei separate Werkstücke unabhängig voneinander transportieren, was sich insbesondere als Vorteil erweist im Falle von jeweils paarweise von der Produktionsanlage gefertigten Werkstücken, wie sie z.B. erhalten werden, wenn ein Werkstück im Pressverfahren in der letzten Presse einer mehrstufigen Presse oder einer Pressenstrasse geteilt wird.

Gemäss der Erfindung wird für den Betrieb einer erfindungsgemässen Transportanlage mehrmals ein Werkstückschlittenkreisprozess durchgeführt wird, welcher die folgenden Schritte umfasst:
i) der leere Werkstückschlitten wird entlang der Werkstückschlittenbahn in die Werkstückschlittenbeladeposition verfahren,
ii) anschliessend wird der in der Werkstückschlittenbeladeposition befindliche Werkstückschlitten mit einem von der Produktionsanlage gefertigten Werkstück beladen,
iii) danach wird der Werkstückschlitten in Richtung der ersten Werkstücktransportrichtung entlang der Werkstückschlittenbahn in die erste Werkstückschlittenentladeposition verfahren,
iv) anschliessend wird mittels der ersten Entladeeinrichtung das Werkstück vom Werkstückschlitten entnommen und quer zur ersten Werkstücktransportrichtung vom Werkstückschlitten weg transportiert,
v) sobald das Werkstück vom Werkstückschlitten entnommen ist, wird der Werkstückschlitten entlang der Werkstückschlittenbahn in die Werkstückschlittenbeladeposition verfahren,
vi) in der Werkstückschlittenbeladeposition wird der Werkstückschlitten danach mit einem weiteren von der Produktionsanlage gefertigten Werkstück beladen,
vii) danach wird der Werkstückschlitten in Richtung der ersten Werkstücktransportrichtung entlang der Werkstückschlittenbahn in die zweite Werkstückschlittenentladeposition verfahren,
viii) anschliessend wird mittels der zweiten Entladeeinrichtung das weitere Werkstück vom Werkstückschlitten entnommen und quer zur ersten Werkstücktransportrichtung vom Werkstückschlitten weg transportiert.

Dieses Verfahren ermöglicht, dass die beiden Entaldeeinrichtungen wenigstens teilweise gleichzeitig arbeiten können, um die Werkstücke quer zur ersten Werkstücktransportrichtung vom Werkstückschlitten weg zu transportieren. Durch den gleichzeitigen Betrieb der beiden Entladeeinrichtungen wird die Werkstücktransportkapazität erhöht.

Vorteilhafterweise werden das erste Werkstück mittels der ersten Entladeeinrichtung und das weitere Werkstück mittels der zweiten Entladeeinrichtung in entgegengesetzte Richtungen quer zur ersten Werkstücktransportrichtung vom Werkstückschlitten weg transportiert. Dadurch wird gewährleistet, dass genügend Platz für die Abstapelung der Werkstücke an zwei verschiedenen Orten zur Verfügung steht.

Im Falle eines Werkstückschlittens, der mit zwei verschiednen Werkstückaufnahmepositionen versehen ist, wird vorteilhafterweise im Zuge des Schrittes zum Beladen des Werkstückschlittens mit einem Werkstück der Werkstückschlitten in Abhängigkeit von der Distanz zwischen der Werkstückschlittenbeladeposition und der Werkstückschlittenentladeposition, in welche der Werkstückschlitten anschliessend zu verfahren ist, in der ersten oder der zweiten Werkstückaufnahmeposition mit dem Werkstück beladen. Dadurch kann der zeitlichen Ablauf des Werkstücktransports mittels der erfindungsgemässen Transportanlage optimiert werden.

Gemäss einem weiteren vorteilhaften Aspekt der Erfindung ist eine Transportanlage zum Wegtransportieren von Werkstücken, die mittels einer Produktionsanlage gefertigt worden sind, von der Produktionsanlage weg, mit einer Gestelltransporteinrichtung versehen, die wenigstens folgende Komponenten umfasst:
A) einen ersten Gestellschlitten der zur Aufnahme und zum Transport eines ersten Gestells ausgebildet ist, das zur Aufnahme einer Vielzahl der von der Produktionsanlage gefertigten Werkstücke ausgebildet ist,
B) eine erste Gestellschlittenbahn, entlang welcher der erste Gestellschlitten wahlweise zwischen einer ersten Gestellbeladeposition und einer ersten Gestelltransportposition hin und her verfahrbar ist,
C) einen zweiten Gestellschlitten, der zur Aufnahme und zum Transport eines zweiten zur Aufnahme einer Vielzahl der von der Produktionsanlage gefertigten Werkstücke ausgebildeten Gestells ausgebildet ist,
D) eine zweite Gestellschlittenbahn, entlang welcher der zweite Gestellschlitten wahlweise zwischen einer zweiten Gestellbeladeposition und einer zweiten Gestelltransportposition hin und her verfahrbar ist,
E) eine Gestelltransportfahrbahn, auf welcher das erste und das zweite Gestell (sowie allfällige weitere Gestelle) transportierbar sind.

Die erste Gestellbeladeposition und die zweite Gestellbeladeposition sind neben der Gestelltransportfahrbahn angeordnet, während die erste Gestelltransportposition und die zweite Gestelltransportposition auf der Gestelltransportfahrbahn angeordnet sind.

Es leuchtet ein, dass dieser Aspekt der Erfindung nicht zwingend im Zusammenhang mit einem Werkstückschlitten verwirklicht sein muss, der zwischen einer Werkstückbeladeposition und zwei verschiedenen Werkstückentladepositionen hin und her verfahrbar ist.

Die Gestellschlitten können entweder als separate, vom Gestell unabhängige Konstruktionseinheiten sein. Als Alternative dazu können die Gestellschlitten aber auch als integrale Bestandteile der Gestelle ausgebildet sein.

Vorzugsweise sind sämtliche Gestellschlitten identisch zueinander ausgebildet. Grundsätzlich ist es im Rahmen der vorliegenden Erfindung aber auch möglich, dass wenigstens einige der Gestellschlitten voneinander verschieden ausgebildet sind.

Vorzugsweise sind auch sämtliche Gestelle identische zueinander ausgebildet. Grundsätzlich sind aber auch hier wieder Erfindungsvarianten mit unterschiedlich ausgebildeten Gestellen möglich.

Durch die Möglichkeit zum Wegtransportieren der Gestelle auf einer Transportfahrbahn wird die Leistungsfähigkeit der Transportanlage weiter verbessert.

Vorteilhafterweise umfasst die Gestelltransporteinrichtung weiter eine Gestellschlittenbahnsperrvorrichtung, die zum wahlweisen Sperren und Freigeben des ersten Gestellschlittens in der ersten Gestellbeladeposition und/oder des zweiten Gestellschlittens in der zweiten Gestellbeladeposition ausgebildet ist. Im Falle eines in seiner Beladeposition mittels der Gestellschlittenbahnsperrvorrichtung gesperrten Gestellschlittens kann dieser nicht entlang seiner zugeordneten Gestellschlittenbahn auf die Gestelltransportfahrbahn fahren. Mittels der Gestellschlittenbahnsperrvorrichtung kann somit die Gestelltransportfahrbahn während gewissen Zeiten frei gehalten werden von unerwünschterweise auf die Gestelltransportfahrbahn fahrenden Gestellschlitten.

Die Gestellschlittenbahnsperrvorrichtung kann als integraler Teil eine Steuerungsanlage zur automatischen Steuerung der Gestellschlitten vorgesehen sein. Als Alternative und/oder in Ergänzung dazu können aber auch unabhängig von der Steuerungsanlage betätigbare mechanische Sperrmittel vorgesehen sein, welche die Gestellschlitten in den zugeordneten Gestellbeladepositionen sperren können.

Vorteilhafterweise umfasst die Gestelltransporteinrichtung weiter eine Gestelltransportfahrbahnsperrvorrichtung zur Sperrung des Transports von Gestellen in Richtung einer durch die Gestelltransportfahrbahn definierten Gestelltransportfahrbahnlängsrichtung auf der Gestelltransportfahrbahn. Mittels der Gestelltransportfahrbahnsperrvorrichtung kann somit die Gestelltransportfahrbahn während gewissen Zeiten frei gehalten werden von unerwünschten Gestelltransporten in Gestelltransportfahrbahnlängsrichtung auf der Gestelltransportfahrbahn.

Falls der Gestelltransport auf der Gestelltransportfahrbahn von Operateuren durchgeführt wird (welche z.B. die Gestelle auf der Gestellfahrbahn mittels Gabelstaplern oder anderen geeigneten Fahrzeugen transportieren), kann die Gestelltransportfahrbahnsperrvorrichtung Mittel zur optischen Anzeige (z.B. eine Lichtsignalanlage) umfassen, welche den Operateuren anzeigen, dass die Gestelltransportfahrbahn gesperrt sind.

Im Falle von automatisch durchgeführten Gestelltransporten auf der Gestelltransportfahrbahn kann die Gestelltransportfahrbahnsperrvorrichtung aber auch als integraler Teil eine Steuerungsanlage zur Steuerung der automatischen Gestelltransporte ausgebildet sein.

Eine bevorzugte Ausführungsart der Erfindung zeichnet sich dadurch aus, die erste Gestellschlittenbahn gerade verläuft und das erste Gestell mittels des ersten Gestellschlittens in einer ersten Gestelltransportrichtung von der ersten Gestellbeladeposition zur ersten Gestelltransportposition transportierbar ist. Weiter verläuft die zweite Gestellschlittenbahn parallel zur ersten Gestellschlittenbahn, d.h. ebenfalls gerade. Zudem ist die zweite Gestellschlittenbahn und um mehr als eine Gestellbreite (gemessen quer zur Richtung der Gestellschlittenbahn, d.h. quer zur ersten Gestelltransportrichtung) quer zur ersten Gestelltransportrichtung von der ersten Gestellschlittenbahn versetzt angeordnet. Weiter erstreckt sich die Gestelltransportfahrbahn in einer geraden Richtung (d.h. in Gestelltransportfahrbahnlängsrichtung) quer zur ersten Gestelltransportrichtung. Durch diese Ausführungsart der Erfindung wird eine besonders platzsparende Anordnung der Transportanlage erreicht.

Vorteilhafterweise umfasst die Gestelltransporteinrichtung weiter folgende Komponenten:
J) einen dritten Gestellschlitten, der zur Aufnahme und zum Transport eines dritten zur Aufnahme einer Vielzahl der von der Produktionsanlage gefertigten Werkstücke ausgebildeten Gestells ausgebildet ist,
K) eine dritte Gestellschlittenbahn, entlang welcher der dritte Gestellschlitten wahlweise zwischen einer dritten Gestelltransportposition und einer ersten Gestellparkierposition hin und her verfahrbar ist, wobei die dritte Gestelltransportposition an einer von der ersten Gestelltransportposition sowie von der zweiten Gestelltransportposition distanzierten Stelle auf der Gestelltransportfahrbahn und die erste Gestellparkierposition neben der Gestelltransportfahrbahn angeordnet sind,
L) einen ersten Gestelltransportwagen, der zum Transport des ersten Gestells von der ersten Gestelltransportposition zur dritten Gestelltransportposition oder des zweiten Gestells von der zweiten Gestelltransportposition zur dritten Gestelltransportposition auf der Gestelltransportfahrbahn ausgebildet ist.

Durch die Möglichkeit zum Anordnung der Gestelle in einer abseits der Gestelltransportfahrbahn vorgesehenen Gestellparkierposition wird die Leistungsfähigkeit der Transportanlage weiter verbessert.

Die die Gestelltransporteinrichtung kann zusätzlich folgende Komponenten umfassen:
M) eine Gestellparkierbahn, auf welcher das erste und das zweite Gestell sowie weitere zu diesen identische Gestelle transportierbar sind,
N) einen vierten Gestellschlitten, der zur Aufnahme und zum Transport eines vierten zur Aufnahme einer Vielzahl der von der Produktionsanlage gefertigten Werkstücke ausgebildeten Gestells ausgebildet ist,
O) eine vierte Gestellschlittenbahn, entlang welcher der vierte Gestellschlitten wahlweise zwischen einer vierten Gestelltransportposition und einer zweiten Gestellparkierposition hin und her verfahrbar ist, wobei die vierte Gestelltransportposition an einer von der dritten Gestelltransportposition distanzierten Stelle auf der Gestelltransportfahrbahn, die erste Gestellparkierposition auf der Gestellparkierbahn und die zweite Gestellparkierposition an einer von der ersten Gestellparkierposition distanzierten Stelle auf der Gestellparkierbahn angeordnet sind,
P) einen zweiten Gestelltransportwagen, der zum Transport des dritten Gestells von der ersten Gestellparkierposition zur zweiten Gestellparkierposition ausgebildet ist.

Die Gestellparkierbahn und der zweite Gestelltransportwagen ermöglichen eine weitere Optimierung des zeitlichen Ablaufs des Werkstücks- und Gestelltransports mittels der erfindungsgemässen Transportanlage.

Vorteilhafterweise sind Transportanlage sämtliche Gestellschlitten im Wesentlichen identisch zueinander ausgebildet und sind weiter die Transportwagen zum Transport der Gestelle mitsamt den Gestellschlitten ausgebildet, von denen die Gestelle aufgenommen sind. Dadurch lässt sich eine besonders einfache Konstruktion der erfindungsgemässen Transportanlage verwirklichen.

Gemäss der Erfindung werden für den Betrieb einer erfindungsgemässen Transportanlage, die mit einer Gestelltransporteinrichtung versehen ist, die folgenden Gestellprozesse mehrmals und wenigstens teilweise gleichzeitig durchgeführt:
ein erster Gestellprozess, der die Schritte umfasst:
   I) ein Gestellschlitten wird mitsamt einem von ihm aufgenommenen leeren Gestell, das zur Aufnahme einer Vielzahl der von der Produktionsanlage gefertigten Werkstücke ausgebildet ist, entlang der ersten Gestellschlittenbahn von der ersten Gestelltransportposition in die erste Gestellbeladeposition verfahren,
   II) anschliessend wird das vom Gestellschlitten in der ersten Gestellbeladeposition aufgenommene Gestell mit einer Vielzahl der von der Produktionsanlage gefertigten Werkstücke beladen,
   III) danach wird der in der ersten Gestellbeladeposition angeordnete Gestellschlitten mitsamt dem von ihm aufgenommenen, mit Werkstücken beladenen Gestell entlang der ersten Gestellschlittenbahn von der ersten Gestellbeladeposition in die erste Gestelltransportposition verfahren,
   IV) anschliessend wird das vom Gestellschlitten in der ersten Gestellbeladeposition aufgenommene, mit Werkstücken beladene Gestell auf der Gestelltransportfahrbahn von der ersten Gestelltransportposition weg transportiert,
   V) danach wird ein weiteres leeres Gestell, das zur Aufnahme einer Vielzahl der von der Produktionsanlage gefertigten Werkstücke ausgebildet ist, auf der Gestelltransportfahrbahn zur ersten Gestelltransportposition hin transportiert und zusammen mit einem Gestellschlitten, von dem es aufgenommen ist, in der ersten Gestelltransportposition angeordnet, ein zweiter Gestellprozess, der die Schritte umfasst:
   VI) ein Gestellschlitten wird mitsamt einem von ihm aufgenommenen leeren Gestell, das zur Aufnahme einer Vielzahl der von der Produktionsanlage gefertigten Werkstücke ausgebildet ist, entlang der zweiten Gestellschlittenbahn von der ersten Gestelltransportposition in die erste Gestellbeladeposition verfahren"
   VII) anschliessend wird das vom Gestellschlitten in der zweiten Gestellbeladeposition aufgenommene Gestell mit einer Vielzahl der von der Produktionsanlage gefertigten Werkstücke beladen,
   VIII) danach wird der in der zweiten Gestellbeladeposition angeordnete Gestellschlitten mitsamt dem von ihm aufgenommenen, mit Werkstücken beladenen Gestell entlang der zweiten Gestellschlittenbahn von der zweiten Gestellbeladeposition in die zweite Gestelltransportposition verfahren,
   IX) anschliessend wird das vom Gestellschlitten in der zweiten Gestellbeladeposition aufgenommene, mit Werkstücken beladene Gestell auf der Gestelltransportfahrbahn von der zweiten Gestelltransportposition weg transportiert,
   X) danach wird ein weiteres leeres Gestell, das zur Aufnahme einer Vielzahl der von der Produktionsanlage gefertigten Werkstücke ausgebildet ist, auf der Gestelltransportfahrbahn zur zweiten Gestelltransportposition hin transportiert und zusammen mit einem Gestellschlitten, von dem es aufgenommen ist, in der zweiten Gestelltransportposition angeordnet.
      Vorzugsweise wird zudem mittels der Gestellschlittenbahnsperrvorrichtung entweder während der Durchführung eines der Schritte IV zum Wegtransportieren eines Gestells von der ersten Gestelltransportposition weg und V zum Hintransportieren eines Gestells zur ersten Gestelltransportposition hin der in der zweiten Gestellbeladeposition angeordnete Gestellschlitten gesperrt. Oder es wird während der Durchführung eines der Schritte IX zum Wegtransportieren eines Gestells von der zweiten Gestelltransportposition weg und X zum Hintransportieren eines Gestells zur zweiten Gestelltransportposition hin der in der ersten Gestellbeladeposition angeordnete Gestellschlitten mittels der Gestellschlittenbahnsperrvorrichtung gesperrt. Dadurch lässt sich das Kollisionsrisiko auf der Gestelltransportfahrbahn vermindern.
      Gemäss einem weiteren vorteilhaften Aspekt der Erfindung werden zusätzlich die folgenden Gestellprozesse mehrmals und wenigstens teilweise gleichzeitig zum ersten Gestellprozess und zum zweiten Gestellprozess durchgeführt:
      ein dritter Gestellprozess, der die Schritte umfasst:
   XI) ein mit Werkstücken beladenes Gestell, das von einem in der der ersten Gestelltransportposition angeordneten Gestellschlitten aufgenommen ist, wird mittels des ersten Gestelltransportwagens auf der Gestelltransportfahrbahn von der ersten Gestelltransportposition zur dritten Gestelltransportposition hin transportiert und in der dritten Gestelltransportposition zusammen mit einem Gestellschlitten angeordnet, von dem es aufgenommen ist,
   XII) danach wird der in der dritten Gestelltransportposition angeordnete Gestellschlitten mitsamt dem von ihm aufgenommenen, mit Werkstücken beladenen Gestell entlang der dritten Gestellschlittenbahn von der dritten Gestelltransportposition in die erste Gestellparkierposition verfahren,
ein vierter Gestellprozess, der die Schritte umfasst:
   XIII) ein mit Werkstücken beladenes Gestell, das von einem in der der zweiten Gestelltransportposition angeordneten Gestellschlitten aufgenommen ist, wird mittels des ersten Gestelltransportwagens auf der Gestelltransportfahrbahn von der zweiten Gestelltransportposition zur dritten Gestelltransportposition hin transportiert und in der dritten Gestelltransportposition zusammen mit einem Gestellschlitten angeordnet, von dem es aufgenommen ist,
   XIV) danach wird der in der dritten Gestelltransportposition angeordnete Gestellschlitten mitsamt dem von ihm aufgenommenen, mit Werkstücken beladenen Gestell entlang der dritten Gestellschlittenbahn von der dritten Gestelltransportposition in die erste Gestellparkierposition verfahren,
      wobei der Schritt XI des dritten Gestellprozesses gleichzeitig der Schritt IV des ersten Gestellprozesses ist und der Schritt XIII des vierten Gestellprozesses gleichzeitig der Schritt IX des zweiten Gestellprozesses ist.
      Diese Verfahrensschritte ermöglichen eine weitere Optimierung des zeitlichen Ablaufs des Werkstücks- und Gestelltransports mittels der erfindungsgemässen Transportanlage.
      Vorzugsweise wird weiter zusätzlich der folgende fünfte Gestellprozess mehrmals und wenigstens teilweise gleichzeitig zum ersten Gestellprozess und zum zweiten Gestellprozess durchgeführt, wobei der fünfte Gestellprozess die Schritte umfasst:
   XV) ein in der ersten Gestellparkierposition angeordneter Gestellschlitten wird mitsamt einem von ihm aufgenommenen, mit Werkstücken beladenen Gestell mittels des zweiten Gestelltransportwagens auf der Gestellparkierbahn von der ersten Gestellparkierposition zur zweiten Gestellparkierposition transportiert und in der zweiten Gestellparkierposition angeordnet,
   XVI) danach wird das vom Gestellschlitten in der zweiten Gestellparkierposition aufgenommene, mit Werkstücken beladene Gestell vom Gestellschlitten in der zweiten Gestellparkierposition entnommen und weg transportiert,
   XVII) anschliessend wird der in der zweiten Gestellparkierposition angeordnete leere Gestellschlitten entlang der vierten Gestellschlittenbahn von der zweiten Gestellparkierposition in die vierte Gestelltransportposition verfahren,
   XVIII) danach wird ein leeres Gestell, das zur Aufnahme einer Vielzahl der von der Produktionsanlage gefertigten Werkstücke ausgebildet ist, zur vierten Gestelltransportposition hin transportiert und von dem in der der vierten Gestelltransportposition angeordneten Gestellschlitten aufgenommen,
   XIX) anschliessend wird der in der vierten Gestelltransportposition angeordnete Gestellschlitten mitsamt dem von ihm aufgenommenen leeren Gestell mittels des ersten Gestelltransportwagens auf der Gestelltransportfahrbahn von der vierten Gestelltransportposition entweder zur ersten Gestelltransportposition hin transportiert und in der ersten Gestelltransportposition angeordnet oder zur zweiten Gestelltransportposition hin transportiert und in der zweiten Gestelltransportposition angeordnet,
wobei der Schritt XIX des fünften Gestellprozesses gleichzeitig der Schritt V des ersten Kreisprozesses oder der Schritt X des zweiten Kreisprozesses ist.

Durch die Verfahrensschritte des fünften Gestellprozesses kann der zeitlichen Ablauf des Werkstücks- und Gestelltransports mittels der erfindungsgemässen Transportanlage zusätzlich optimiert werden.

Eine Gestelltransportsteuerungsanlage zur Steuerung einer Transportanlage gemäss der Erfindung zeichnet sich dadurch aus, dass die Gestelltransportsteuerungsanlage zur Steuerung der Transportanlage derart ausgebildet ist, dass diese gemäss dem erfindungsgemässen Verfahren betrieben wird.

Ein Computerprogramm zur Steuerung einer erfindungsgemässen Transportanlage zeichnet sich dadurch aus, dass mittels des Computerprogramms die Transportanlage automatisch gemäss einem erfindungsgemässen Verfahren betrieben wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Transportanlage gemäss einer ersten bevorzugten Ausführungsart der Erfindung in einer vereinfachten, schematischen perspektivischen Teilansicht;
- Fig. 2: die Transportanlage aus Fig. 1 in einer vereinfachten, schematischen Ansicht von oben.

Grundsätzlich sind in den Figuren gleiche Teile mit gleichen Bezugszeichen versehen.

### Wege zur Ausführung der Erfindung

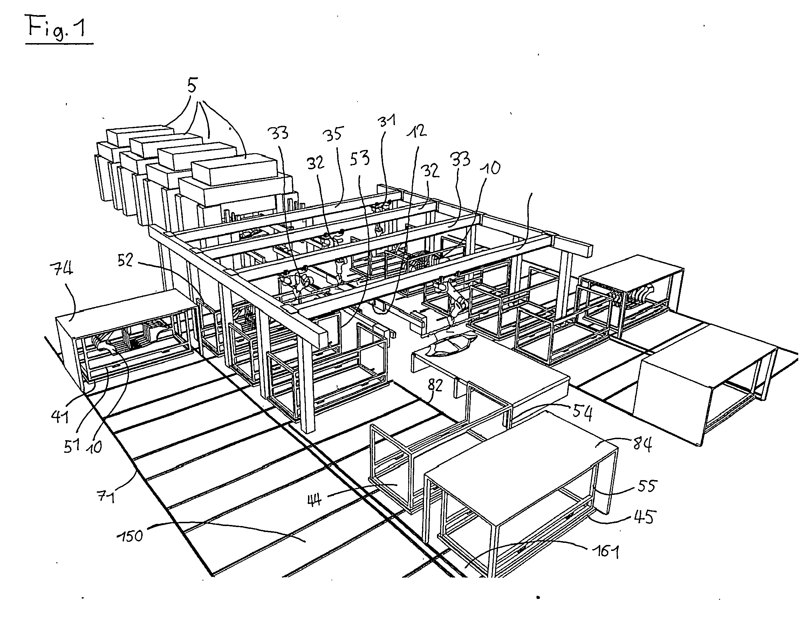

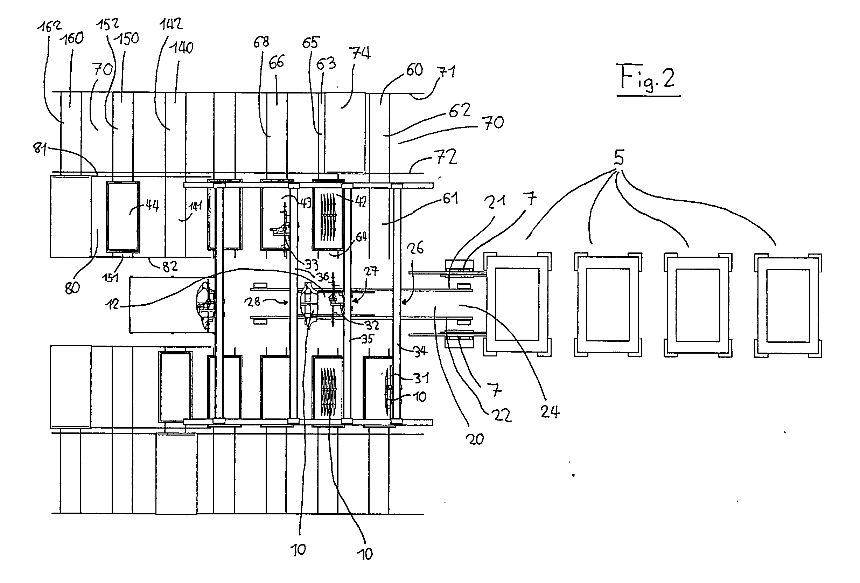

Die in den Figuren 1 und 2 dargestellte Transportanlage dient zum Wegtransportieren von Werkstücken 10, die mittels einer vier Pressenstufen umfassenden Presse 5 für die Umformung von Stahlblech oder Aluminiumblech gefertigt worden sind. Die Werkstücke 10 durchlaufen die Presse 5 in einer durch die Presse vorgegebenen, im Wesentlichen geraden Richtung und werden am Ende der Presse 5 von einer Ausgabevorrichtung 7 der Presse ausgegeben, welche als letzte Station einer Förderanlage zur Förderung der Werkstücke 10 durch die Presse 5 hindurch ausgebildet ist.

Die Transportanlage ist mit einer Werkstücktransporteinrichtung versehen. Die Werkstücktransporteinrichtung umfasst einen Werkstückschlitten 12, der zur Aufnahme und zum Transport eines der von der Presse 5 gefertigten Werkstücke 10 ausgebildet ist.

Die Werkstücktransporteinrichtung umfasst weiter eine Werkstückschlittenbahn 20, die zwei horizontale gerade Schienen 21, 22 aufweist. Die Schienen 21, 22 und somit die Werkstückschlittenbahn 20 verlaufen parallel zur Transportrichtung der Werkstücke 10 durch die Presse 5 hindurch. Der Werkstückschlitten 12 ist auf der Werkstückschlittenbahn 20 wahlweise zwischen einer Werkstückschlittenbeladeposition 24, einer ersten Werkstückschlittenentladeposition 26, einer zweiten Werkstückschlittenentladeposition 27 und einer dritten Werkstückschlittenentladeposition 28 hin und her verfahrbar.

Die Werkstückschlittenbeladeposition 24 liegt in unmittelbarer Nähe des Endes der Presse 5. Wenn der Werkstückschlitten 12 in der Werkstückschlittenbeladeposition 24 angeordnet ist, kann die Ausgabevorrichtung 7 der Presse 5 ein von der Presse 5 gefertigtes Werkstück 10 direkt auf den Werkstückschlitten 12 laden. Die erste Werkstückschlittenentladeposition 26 ist in Richtung der Werkstückschlittenbahn 20 bzw. deren Schienen 21, 22 weiter von der Presse 5 entfernt angeordnet als die Werkstückschlittenbeladeposition 24. In gleicher Richtung sind die zweite Werkstückschlittenentladeposition 27 und die dritte Werkstückschlittenentladeposition 28 in gegenseitigen Abstand voneinander noch weiter von der Presse 5 entfernt angeordnet.

Die durch den Transport eines Werkstücks 10 mittels des Werkstückschlittens 12 von der Werkstückschlittenbeladeposition 24 zu den Werkstückschlittenentladepositionen 26, 27, 28 definierte erste Werkstücktransportrichtung verläuft parallel zu den Schienen 21, 22 und zur Richtung der Werkstückschlittenbahn 20.

Insgesamt ist die gesamte in den Figuren 1 und 2 dargestellte Transportanlage im Wesentlichen symmetrisch in Bezug auf eine durch die Mittellinie der Werkstückschlittenbahn 20 hindurch verlaufende Vertikalebene ausgebildet.

Die Werkstücktransporteinrichtung umfasst weiter drei gerade längliche Querbalken oder Träger 34, 35, 36 welche sich horizontal und auf jeweils gleicher Höhe rechtwinklig zur Richtung der Werkstückschlittenbahn 20 quer über die Werkstückschlittenbahn 20 hinweg erstrecken. Dabei ist jeder der drei Träger 34, 35, 36 jeweils vertikal über einer der drei Werkstückschlittenentladepositionen 26, 27, 28 auf gleicher Höhe angeordnet, wobei die Träger 34, 35 36 in einer horizontalen Ebene beidseitig je gleich weit über die Werkstückschlittenbahn 20 hinaus vorstehen.

Die Werkstücktransporteinrichtung umfasst weiter drei Entladeeinrichtungen in Form von drei Knickarmrobotern 31, 32, 33, die zum Entladen eines Werkstücks 10 vom Werkstückschlitten 12 ausgebildet sind. Die drei Knickarmroboter sind identisch zueinander ausgebildet und je an einem der drei Träger 34, 35, 36 hängend angeordnet sowie entlang dieser Träger 34, 35, 36 über die Werkstückschlittenbahn 20 hinweg verfahrbar. Jeder der drei Knickarmroboter 31, 32, 33 kann ein Werkstück 10, das auf dem Werkstückschlitten 12 aufgenommen ist, vom Werkstückschlitten 12 entnehmen, wenn dieser in derjenigen Werkstückschlittenentladeposition 26, 27, 28 angeordnet ist, welche direkt unter dem Träger 34, 35, 36 liegt, von dem der Knickarmroboter 31, 32, 33 gehalten wird. Jeder Knickarmroboter 31, 32, 33 kann anschliessend das vom Werkstückschlitten 12 entnommene Werkstück 10 quer zur ersten Werkstücktransportrichtung vom Werkstückschlitten 12 weg zu transportieren, wobei jeder Knickarmroboter 31, 32, 33 das Werkstück wahlweise auf die zwei einander in Bezug auf die Werkstückschlittenbahn 20 gegenüberliegenden Seiten zu transportieren kann.

Die parallel zueinander angeordneten dem Träger 34, 35, 36 sind je in einer Distanz derart voneinander entfernt angeordnet, dass die von ihnen getragenen Knickarmroboter 31, 32, 33 ohne Kollisionsgefahr gleichzeitig und unabhängig voneinander betätigt werden können.

Die in Fig. 1 und 2 dargestellte Transportanlage ist weiter mit einer Gestelltransporteinrichtung versehen, welche - gleich wie die gesamte Transportanlage - symmetrisch in Bezug auf eine durch die Mittellinie der Werkstückschlittenbahn 20 hindurch verlaufende Vertikalebene ausgebildet ist. Aus diesem Grund wird nachfolgend lediglich die von der Presse 5 aus gesehen rechte Hälfte der Gestelltransporteinrichtung beschrieben.

Die rechte Hälfte der Gestelltransporteinrichtung umfasst sechs Gestellschlitten 41, 42, 43, 44, 45, 46, die identisch zueinander ausgebildet sind. Jeder Gestellschlitten 41, 42, 43, 44, 45, 46 ist zur Aufnahme und zum Transport eines Gestells 51, 52, 53, 54, 55, 56 ausgebildet. Die Gestelle 51, 52, 53, 54, 55, 56 sind zur Aufnahme einer Vielzahl der von der Produktionsanlage gefertigten Werkstücke 10 ausgebildet, wobei die Gestelle 51, 52, 53, 54, 55, 56 ebenfalls identisch zueinander ausgebildet sind. Die Gestellschlitten 41, 42, 43, 44, 45, 46 und die Gestelle 51, 52, 53, 54, 55, 56 sind als separate, voneinander trennbare Konstruktionseinheiten ausgebildet, wobei die Gestelle 51, 52, 53, 54, 55, 56 mittels eines Gabelstaplers einfach von den Gestellschlitten 41, 42, 43, 44, 45, 46 abgehoben werden können, um sie von den Gestellschlitten 41, 42, 43, 44, 45, 46 weg zu transportieren.

Die rechte Hälfte der Gestelltransporteinrichtung umfasst eine erste Gestellschlittenbahn 60 mit einem Paar von zwei geraden, parallel zueinander angeordneten Schienen, die in einer horizontalen Ebene parallel zur Längsrichtung der Träger 34, 35, 36 (und somit senkrecht zur ersten Werkstücktransportrichtung) verlaufen, wobei die durch die beiden Schienen der ersten Gestellschienenbahn 60 definierte Ebene tiefer liegt als die durch die beiden Schienen 21, 22 der Werkstückschlittenbahn 20 definierte Ebene.

Die erste Gestellschienenbahn 60 ist derart ausgebildet und angeordnet, dass ein beliebiger der Gestellschlitten 41, 42, 43, 44, 45, 46 auf ihr wahlweise zwischen einer ersten Gestellbeladeposition 61 und einer ersten Gestelltransportposition 62 hin und her verfahrbar ist (in dem in Fig. 1 und 2 dargestellten Betriebszustand der Transportanlage befindet sich kein Gestellschlitten auf der ersten Gestellschienenbahn 60). Die erste Gestellbeladeposition 61 befindet im Bereich des der Werkstückschlittenbahn 20 zugewandten Längsendes der ersten Gestellschienenbahn 60, während sich die erste Gestelltransportposition 62 im Bereich des von der Werkstückschlittenbahn 20 entfernten Längsendes der ersten Gestellschienenbahn 60 befindet.

In Längsrichtung der Werkstückschlittenbahn 20 betrachtet ist die erste Gestellschienenbahn 60 unmittelbar vor dem ersten Träger 34 (und somit unmittelbar vor der ersten Werkstückschlittenentladeposition 26 angeordnet. Quer zur Längsrichtung der Werkstückschlittenbahn 20 betrachtet ist die gesamte erste Gestellschienenbahn 60 in einem seitlichen Abstand neben der Werkstückschlittenbahn 20 derart angeordnet, dass eine vom ersten Träger 34 und vom zweiten Träger 35 aufgespannte (imaginäre) Ebene die Gestellschienenbahn 60 in einem der Werkstückschlittenbahn 20 zugewandten Längsbereich von ungefähr 40% der Gesamtlänge der Gestellschienenbahn 60 noch überdeckt, während die restlichen 60% der Gestellschienenbahn 60 ausserhalb dieser Ebene liegen. Dabei befindet sich der grösste Teil der erste Gestellbeladeposition 61 in dem von den Trägern 34, 35 überdeckten Bereich, während die erste Gestellbeladeposition 61 vollständig ausserhalb dieses Bereichs liegt.

Die rechte Hälfte der Gestelltransporteinrichtung umfasst weiter eine zweite Gestellschlittenbahn 63 und eine dritte Gestellschlittenbahn 66, die beide identisch zur ersten Gestellschlittenbahn 60 ausgebildet sind. Die zweite Gestellschlittenbahn 63 ist parallel zur Längsrichtung der Werkstückschlittenbahn 20 von der ersten Gestellschlittenbahn 60 versetzt derart angeordnet, dass sie in Längsrichtung der Werkstückschlittenbahn 20 betrachtet unmittelbar vor der zweiten Werkstückschlittenentladeposition 27 (jedoch seitlich zu dieser versetzt) liegt. Die dritte Gestellschlittenbahn 66 ist parallel zur Längsrichtung der Werkstückschlittenbahn 20 von der ersten Gestellschlittenbahn 60 versetzt derart angeordnet, dass sie in Längsrichtung der Werkstückschlittenbahn 20 betrachtet unmittelbar vor der dritten Werkstückschlittenentladeposition 28 (jedoch seitlich zu dieser versetzt) liegt.

Jeder beliebige der Gestellschlitten 41, 42, 43, 44, 45, 46 ist auf der zweiten Gestellschienenbahn 63 wahlweise zwischen einer zweiten Gestellbeladeposition 64 und einer zweiten Gestelltransportposition 65 hin und her verfahrbar. In dem in Fig. 1 und 2 dargestellten Betriebszustand der Transportanlage ist der zweite Gestellschlitten 42 in der zweiten Gestellbeladeposition 64 angeordnet.

Jeder beliebige der Gestellschlitten 41, 42, 43, 44, 45, 46 ist auf der dritten Gestellschienenbahn 66 wahlweise zwischen einer dritten Gestellbeladeposition 67 und einer dritten Gestelltransportposition 68 hin und her verfahrbar. In dem in Fig. 1 und 2 dargestellten Betriebszustand der Transportanlage ist der dritte Gestellschlitten 43 in der dritten Gestellbeladeposition 67 angeordnet.

Die rechte Hälfte der Gestelltransporteinrichtung umfasst weiter eine vierte Gestellschlittenbahn 140, eine fünfte Gestellschlittenbahn 150 und eine sechste Gestellschlittenbahn 160, die identisch zur ersten Gestellschlittenbahn 60 ausgebildet sind. Die vierten, fünften und sechsten Gestellschlittenbahnen 140, 150, 160 sind parallel zur Längsrichtung der Werkstückschlittenbahn 20 von der dritten Gestellschlittenbahn 66 in Richtung von der Presse 5 weg versetzt und in gegenseitigen Abstand zueinander angeordnet, wobei die vierten, fünften und sechsten Gestellschlittenbahnen 140, 150, 160 in Längsrichtung der Werkstückschlittenbahn 20 in einem deutlichen Abstand hinter (d.h. weiter von der Presse 5 entfernt) dem dritten Träger 36 angeordnet sind.

Jeder beliebige der Gestellschlitten 41, 42, 43, 44, 45, 46 ist auf der vierten Gestellschienenbahn 140 wahlweise zwischen einer ersten Gestellparkierposition 141 und einer vierten Gestelltransportposition 142 hin und her verfahrbar. Jeder beliebige der Gestellschlitten 41, 42, 43, 44, 45, 46 ist auf der fünften Gestellschienenbahn 150 wahlweise zwischen einer zweiten Gestellparkierposition 151 und einer fünften Gestelltransportposition 152 hin und her verfahrbar. Jeder beliebige der Gestellschlitten 41, 42, 43, 44, 45, 46 ist auf der sechsten Gestellschienenbahn 160 wahlweise zwischen einer dritten Gestellparkierposition 161 und einer sechsten Gestelltransportposition 162 hin und her verfahrbar.

In dem in Fig. 1 und 2 dargestellten Betriebszustand der Transportanlage sind der vierte Gestellschlitten 44 in der zweiten Gestellparkierposition 151 und der fünfte Gestellschlitten 45 in dritten Gestellparkierposition 161 angeordnet.

Die rechte Hälfte der Gestelltransporteinrichtung umfasst weiter eine Gestelltransportfahrbahn 70 mit einem Paar von zwei geraden, parallel zueinander angeordneten Schienen 71, 72, die in einer horizontalen Ebene parallel zur ersten Werkstücktransportrichtung verlaufen. Die Gestelltransportfahrbahn 70 verläuft auf der von der Werkstückschlittenbahn 20 entfernten Seite den Gestellbeladepositionen 61, 64, 67 entlang und in gleicher Richtung weiter von der Presse 5 weg, wobei sämtliche Gestellbeladepositionen 61, 64, 67 vollständig neben der Gestelltransportfahrbahn 70 liegen, während sämtliche Gestelltransportpositionen 62, 65, 68, 142, 152, 162 vollständig auf der Gestelltransportfahrbahn 70 liegen.

Die rechte Hälfte der Gestelltransporteinrichtung umfasst weiter einen ersten Gestelltransportwagen 74. Dieser ist zum Transport eines beliebigen Gestellschlittens 41, 42, 43, 44, 45, 46 mitsamt einem vom Gestellschlitten 41, 42, 43, 44, 45, 46 aufgenommenen Gestell 51, 52, 53, 54, 55, 56 ausgebildet. Der erste Gestelltransportwagen 74 ist weiter derart ausgebildet, dass er einen Gestellschlitten mitsamt dem von ihm aufgenommenen Gestell an einer beliebigen Gestelltransportposition 62, 65, 68, 142, 152, 162 von der zugeordneten Gestellschlittenbahn 60, 63, 66, 140, 150, 160 entnehmen, zu einer beliebigen anderen Gestelltransportposition 62, 65, 68, 142, 152, 162 transportieren und in dieser Gestelltransportposition 62, 65, 68, 142, 152, 162 wieder auf der zugeordneten Gestellschlittenbahn 60, 63, 66, 140, 150, 160 anordnen kann.

In dem in Fig. 1 und 2 dargestellten Betriebszustand der Transportanlage ist der erste Gestellschlitten 41 mitsamt einem von ihm aufgenommenen Gestell 51 vom ersten Gestelltransportwagen 74 aufgenommen, wobei sich der erste Gestelltransportwagen 74 zwischen der ersten Gestelltransportposition 62 und der zweiten Gestelltransportposition 65 auf der Gestelltransportfahrbahn 70 befindet.

Die rechte Hälfte der Gestelltransporteinrichtung umfasst weiter eine Gestellparkierbahn 80 mit einem Paar von zwei geraden, parallel zueinander angeordneten Schienen 81, 82, die in einer horizontalen Ebene parallel zur ersten Werkstücktransportrichtung verlaufen. Die Gestellparkierbahn 80 verläuft auf der der Werkstückschlittenbahn 20 zugewandten Seite der Gestelltransportfahrbahn 70 entlang, wobei sämtliche Gestellparkierpositionen 141, 151, 161 vollständig neben der Gestelltransportfahrbahn 70 und vollständig auf der Gestellparkierbahn 80 liegen.

Die rechte Hälfte der Gestelltransporteinrichtung umfasst weiter einen zweiten Gestelltransportwagen 84. Dieser ist identisch zum ersten Gestelltransportwagen 74 ausgebildet, so dass er einen beliebigen Gestellschlitten mitsamt dem von ihm aufgenommenen Gestell an einer beliebigen Gestellparkierposition 141, 151, 161 von der zugeordneten Gestellschlittenbahn 140, 150, 160 entnehmen, zu einer beliebigen anderen Gestellparkierposition 141, 151, 161 transportieren und in dieser Gestellparkierposition 141, 151, 161 wieder auf der zugeordneten Gestellschlittenbahn 140, 150, 160 anordnen kann.

In dem in Fig. 1 und 2 dargestellten Betriebszustand der Transportanlage ist der fünfte Gestellschlitten 45 mitsamt einem von ihm aufgenommenen Gestell 55 vom zweiten Gestelltransportwagen 84 aufgenommen, wobei sich der zweite Gestelltransportwagen 74 über der dritten Gestellparkierposition 161 auf der Gestellparkierbahn 80 befindet.

Zusammenfassend ist festzustellen, dass durch die Erfindung eine dem eingangs genannten technischen Gebiet zugehörende Transportanlage geschaffen wird, deren Leistungsfähigkeit der Leistungsfähigkeit von modernen Pressen und anderen modernen Produktionsanlagen angemessen ist.

## Patentansprüche

1. Transportanlage zum Wegtransportieren von Werkstücken (10), die mittels einer Produktionsanlage (5) gefertigt worden sind, von der Produktionsanlage (5) weg, mit einer Werkstücktransporteinrichtung, die wenigstens umfasst:
a) einen Werkstückschlitten (12), der zum Transport wenigstens eines der Werkstücke (10) ausgebildet ist,
b) eine längliche Werkstückschlittenbahn (20) , entlang welcher der Werkstückschlitten (12) wahlweise zwischen einer Werkstückschlittenbeladeposition (24) und einer ersten Werkstückschlittenentladeposition (26) sowie zwischen der Werkstückschlittenbeladeposition (24) und einer zweiten Werkstückschlittenentladeposition (26) hin und her verfahrbar ist,
c) eine erste Entladeeinrichtung (31),
d) eine zweite Entladeeinrichtung (32),
wobei
e) die Werkstückschlittenbeladeposition (24) in der Nähe der Produktionsanlage (5) vorgesehen ist, die erste Werkstückschlittenentladeposition (26) weiter von der Produktionsanlage (5) distanziert ist als die Werkstückschlittenbeladeposition (24) und die zweite Werkstückschlittenentladeposition (27) noch weiter von der Produktionsanlage (5) distanziert ist als die erste Werkstückschlittenentladeposition (26);
f) der Werkstückschlitten (12) in der Werkstückschlittenbeladeposition (24) mit wenigstens einem der von der Produktionsanlage (5) gefertigten Werkstücke (10) derart beladbar ist, dass dieses anschliessend mittels des Werkstückschlittens (12) von der Werkstückschlittenbeladeposition (24) weg in einer ersten Werkstücktransportrichtung zur ersten oder zur zweiten Werkstückschlittenentladeposition (26, 27) transportierbar ist;
g) die erste Entladeeinrichtung (31) derart ausgebildet und in der Nähe der ersten Werkstückschlittenentladeposition (26) angeordnet ist, dass mittels der ersten Entladeeinrichtung (31) ein zuvor mittels des Werkstückschlittens (12) von der Werkstückschlittenbeladeposition (24) zur ersten Werkstückschlittenentladeposition (26) transportiertes Werkstück (10) von dem in die erste Werkstückschlittenentladeposition (26) gefahrenen Werkstückschlitten (12) entnehmbar und quer zur ersten Werkstücktransportrichtung vom Werkstückschlitten (12) weg transportierbar ist, wobei die erste Entladeeinrichtung (31) unabhängig von der zweiten Entladeeinrichtung (32) betätigbar ist;
h) die zweite Entladeeinrichtung (32) derart ausgebildet und in der Nähe der zweiten Werkstückschlittenentladeposition (27) angeordnet ist, dass mittels der zweiten Entladeeinrichtung (32) ein zuvor mittels des Werkstückschlittens (12) von der Werkstückschlittenbeladeposition (24) zur zweiten Werkstückschlittenentladeposition (27) transportiertes Werkstück (10) von dem in die zweite Werkstückschlittenentladeposition (27) gefahrenen Werkstückschlitten (12) entnehmbar und quer zur ersten Werkstücktransportrichtung vom Werkstückschlitten (12) weg transportierbar ist, wobei die zweite Entladeeinrichtung (32) unabhängig von der ersten Entladeeinrichtung (31) betätigbar ist.

2. Transportanlage nach Anspruch 1, **dadurch gekennzeichnet, dass** der Werkstückschlitten (12) mit einer Werkstückhaltevorrichtung versehen ist, welche das mittels des Werkstückschlittens (12) transportierte Werkstück (10) während dem Transport von der Werkstückschlittenbeladeposition (24) zur ersten oder zur zweiten Werkstückschlittenentladeposition (26, 27) bezüglich dem Werkstückschlitten (12) lage- und positionsgenau festhält.

3. Transportanlage nach Anspruch 1 oder 2, **gekennzeichnet durch** eine Ausbildung des Werkstückschlittens derart, dass das Werkstück für den Transport mittels des Werkstückschlittens wahlweise in einer ersten oder in einer zweiten von wenigstens zwei verschiedenen Werkstückaufnahmepositionen vom Werkstückschlitten aufnehmbar ist, wobei die wenigstens zwei Werkstückaufnahmepositionen längs zur ersten Werkstücktransportrichtung zueinander versetzt sind.

4. Transportanlage nach einem der Ansprüche 1 bis 3, **dadurch gekennzeichnet, dass** wenigstens eine Entladeeinrichtungen (31) als Entladeroboter (31) ausgebildet und an einem quer zur ersten Werkstücktransportrichtung angeordneten länglichen Träger (34) angeordnet ist, an welchem der Entladeroboter (31) in Trägerlängsrichtung über die Werkstückschlittenbahn hinweg verfahrbar ist, um ein zuvor mittels des Entladeroboters (31) vom Werkstückschlitten (12) entnommenes Werkstück quer zur ersten Werkstücktransportrichtung vom Werkstückschlitten (12) weg zu transportieren.

5. Transportanlage nach einem der Ansprüche 1 bis 4, **dadurch gekennzeichnet, dass** die Werkstücktransporteinrichtung einen weiteren Werkstückschlitten umfasst, der entlang einer weiteren, zur ersten Werkstückschlittenbahn parallelen Werkstückschlittenbahn verfahrbar ist, wobei die beiden Werkstückschlitten wahlweise entweder synchron zueinander verfahrbar sind, um ein einziges Werkstück gemeinsam zu transportieren, oder unabhängig voneinander verfahrbar sind, um zwei separate Werkstücke unabhängig voneinander zu transportieren.

6. Verfahren für den Betrieb einer Transportanlage nach einem der Ansprüche 1 bis 5, **dadurch gekennzeichnet, dass** mehrmals ein Werkstückschlittenkreisprozess durchgeführt wird, welcher die folgenden Schritte umfasst:
i) der leere Werkstückschlitten wird entlang der Werkstückschlittenbahn in die Werkstückschlittenbeladeposition verfahren,
ii) anschliessend wird der in der Werkstückschlittenbeladeposition befindliche Werkstückschlitten mit einem von der Produktionsanlage gefertigten Werkstück beladen,
iii) danach wird der Werkstückschlitten in Richtung der ersten Werkstücktransportrichtung entlang der Werkstückschlittenbahn in die erste Werkstückschlittenentladeposition verfahren,
iv) anschliessend wird mittels der ersten Entladeeinrichtung das Werkstück vom Werkstückschlitten entnommen und quer zur ersten Werkstücktransportrichtung vom Werkstückschlitten weg transportiert,
v) sobald das Werkstück vom Werkstückschlitten entnommen ist, wird der Werkstückschlitten entlang der Werkstückschlittenbahn in die Werkstückschlittenbeladeposition verfahren,
vi) in der Werkstückschlittenbeladeposition wird der Werkstückschlitten danach mit einem weiteren von der Produktionsanlage gefertigten Werkstück beladen,
vii) danach wird der Werkstückschlitten in Richtung der ersten Werkstücktransportrichtung entlang der Werkstückschlittenbahn in die zweite Werkstückschlittenentladeposition verfahren,
viii) anschliessend wird mittels der zweiten Entladeeinrichtung das weitere Werkstück vom Werkstückschlitten entnommen und quer zur ersten Werkstücktransportrichtung vom Werkstückschlitten weg transportiert.

7. Verfahren nach Anspruch 6, **dadurch gekennzeichnet, dass** das erste Werkstück mittels der ersten Entladeeinrichtung und das weitere Werkstück mittels der zweiten Entladeeinrichtung in entgegengesetzte Richtungen quer zur ersten Werkstücktransportrichtung vom Werkstückschlitten weg transportiert werden.

8. Verfahren nach Anspruch 6 oder 7 für den Betrieb einer Transportanlage nach Anspruch 3, **dadurch gekennzeichnet, dass** im Zuge des Schrittes ii) zum Beladen des Werkstückschlittens mit dem Werkstück und/oder des Schrittes vi) zum Beladen des Werkstückschlittens mit dem weiteren Werkstück, der Werkstückschlitten in Abhängigkeit von der Distanz zwischen der Werkstückschlittenbeladeposition einerseits und der ersten bzw. der zweiten Werkstückschlittenentladeposition andererseits in der ersten oder der zweiten Werkstückaufnahmeposition mit dem Werkstück bzw. dem weiteren Werkstück beladen wird.

9. Transportanlage, insbesondere nach einem der Ansprüche 1 bis 5, zum Wegtransportieren von Werkstücken (10) , die mittels einer Produktionsanlage (5) gefertigt worden sind, von der Produktionsanlage (5) weg, mit einer Gestelltransporteinrichtung, die wenigstens umfasst:
A) einen ersten Gestellschlitten (41), der zur Aufnahme und zum Transport eines ersten Gestells (51) ausgebildet ist, das zur Aufnahme einer Vielzahl der von der Produktionsanlage (5) gefertigten Werkstücke (10) ausgebildet ist,
B) eine erste Gestellschlittenbahn (60), entlang welcher der erste Gestellschlitten (41) wahlweise zwischen einer ersten Gestellbeladeposition (61) und einer ersten Gestelltransportposition (62) hin und her verfahrbar ist,
C) einen zweiten Gestellschlitten (42), der zur Aufnahme und zum Transport eines zweiten zur Aufnahme einer Vielzahl der von der Produktionsanlage (5) gefertigten Werkstücke (10) ausgebildeten Gestells (52) ausgebildet ist,
D) eine zweite Gestellschlittenbahn (63), entlang welcher der zweite Gestellschlitten (42) wahlweise zwischen einer zweiten Gestellbeladeposition (64) und einer zweiten Gestelltransportposition (65) hin und her verfahrbar ist,
E) eine Gestelltransportfahrbahn (70), auf welcher das erste und das zweite Gestell (51, 52) transportierbar sind,
wobei
F) die erste Gestellbeladeposition (61) und die zweite Gestellbeladeposition (64) neben der Gestelltransportfahrbahn (70) angeordnet sind,
G) die erste Gestelltransportposition (62) und die zweite Gestelltransportposition (65) auf der Gestelltransportfahrbahn (70) angeordnet sind.

10. Transportanlage nach Anspruch 9, **dadurch gekennzeichnet dass** die Gestelltransporteinrichtung weiter umfasst:
H) eine Gestellschlittenbahnsperrvorrichtung, die zum wahlweisen Sperren und Freigeben des ersten Gestellschlittens (41) in der ersten Gestellbeladeposition (61) und/oder des zweiten Gestellschlittens (42) in der zweiten Gestellbeladeposition (64) derart ausgebildet ist, dass im Falle eines in seiner Beladeposition (61, 64) gesperrten Gestellschlittens (41, 42) dieser nicht entlang seiner zugeordneten Gestellschlittenbahn (60, 63) auf die Gestelltransportfahrbahn (70) fahren kann.

11. Transportanlage nach Anspruch 9 oder 10, **dadurch gekennzeichnet, dass** die Gestelltransporteinrichtung weiter eine Gestelltransportfahrbahnsperrvorrichtung umfasst, die zum wahlweisen Sperren und Freigeben der Gestelltransportfahrbahn (70) für den Transport von zur Aufnahme einer Vielzahl der von der Produktionsanlage (5) gefertigten Werkstücke (10) ausgebildeten Gestellen (51, 52, 53, 54, 55, 56) in Richtung einer durch die Gestelltransportfahrbahn (70) definierten Gestelltransportfahrbahnlängsrichtung auf der Gestelltransportfahrbahn (70) ausgebildet ist.

12. Transportanlage nach einem der Ansprüche 9 bis 11, **dadurch gekennzeichnet, dass** die erste Gestellschlittenbahn (60) gerade verläuft und das erste Gestell (51) mittels des ersten Gestellschlittens (41) in einer ersten Gestelltransportrichtung von der ersten Gestellbeladeposition (61) zur ersten Gestelltransportposition (62) transportierbar ist, dass die zweite Gestellschlittenbahn (63) parallel zur ersten Gestellschlittenbahn (60) verläuft und um mehr als eine Gestellbreite quer zur ersten Gestelltransportrichtung von der ersten Gestellschlittenbahn (60) versetzt angeordnet ist, und dass sich die Gestelltransportfahrbahn (70) in einer geraden Richtung quer zur ersten Gestelltransportrichtung erstreckt.

13. Transportanlage nach einem der Ansprüche 9 bis 12, **dadurch gekennzeichnet dass** die Gestelltransporteinrichtung weiter umfasst:
J) einen dritten Gestellschlitten, der zur Aufnahme und zum Transport eines dritten zur Aufnahme einer Vielzahl der von der Produktionsanlage gefertigten Werkstücke ausgebildeten Gestells ausgebildet ist,
K) eine dritte Gestellschlittenbahn, entlang welcher der dritte Gestellschlitten wahlweise zwischen einer dritten Gestelltransportposition und einer ersten Gestellparkierposition hin und her verfahrbar ist, wobei die dritte Gestelltransportposition an einer von der ersten Gestelltransportposition sowie von der zweiten Gestelltransportposition distanzierten Stelle auf der Gestelltransportfahrbahn und die erste Gestellparkierposition neben der Gestelltransportfahrbahn angeordnet sind,
L) einen ersten Gestelltransportwagen, der zum Transport des ersten Gestells von der ersten Gestelltransportposition zur dritten Gestelltransportposition oder des zweiten Gestells von der zweiten Gestelltransportposition zur dritten Gestelltransportposition auf der Gestelltransportfahrbahn ausgebildet ist.

14. Transportanlage nach Anspruch 13, **dadurch gekennzeichnet dass** die Gestelltransporteinrichtung weiter umfasst:
M) eine Gestellparkierbahn, auf welcher das erste und das zweite Gestell sowie weitere zu diesen identische Gestelle transportierbar sind,
N) einen vierten Gestellschlitten, der zur Aufnahme und zum Transport eines vierten zur Aufnahme einer Vielzahl der von der Produktionsanlage gefertigten Werkstücke ausgebildeten Gestells ausgebildet ist,
O) eine vierte Gestellschlittenbahn, entlang welcher der vierte Gestellschlitten wahlweise zwischen einer vierten Gestelltransportposition und einer zweiten Gestellparkierposition hin und her verfahrbar ist, wobei die vierte Gestelltransportposition an einer von der dritten Gestelltransportposition distanzierten Stelle auf der Gestelltransportfahrbahn, die erste Gestellparkierposition auf der Gestellparkierbahn und die zweite Gestellparkierposition an einer von der ersten Gestellparkierposition distanzierten Stelle auf der Gestellparkierbahn angeordnet sind,
P) einen zweiten Gestelltransportwagen, der zum Transport des dritten Gestells von der ersten Gestellparkierposition zur zweiten Gestellparkierposition ausgebildet ist.

15. Transportanlage nach Anspruch 14, **dadurch gekennzeichnet dass** sämtliche Gestellschlitten im Wesentlichen identisch zueinander ausgebildet sind und dass die Transportwagen zum Transport der Gestelle mitsamt den Gestellschlitten, von denen die Gestelle aufgenommen sind, ausgebildet sind.

16. Verfahren insbesondere nach einem der Ansprüche 6 bis 8 für den Betrieb einer Transportanlage nach einem der Ansprüche 9 bis 15, **dadurch gekennzeichnet, dass** die folgenden Gestellprozesse mehrmals und wenigstens teilweise gleichzeitig durchgeführt werden:
ein erster Gestellprozess, der die Schritte umfasst:
I) ein Gestellschlitten wird mitsamt einem von ihm aufgenommenen leeren Gestell, das zur Aufnahme einer Vielzahl der von der Produktionsanlage gefertigten Werkstücke ausgebildet ist, entlang der ersten Gestellschlittenbahn von der ersten Gestelltransportposition in die erste Gestellbeladeposition verfahren,
II) anschliessend wird das vom Gestellschlitten in der ersten Gestellbeladeposition aufgenommene Gestell mit einer Vielzahl der von der Produktionsanlage gefertigten Werkstücke beladen,
III) danach wird der in der ersten Gestellbeladeposition angeordnete Gestellschlitten mitsamt dem von ihm aufgenommenen, mit Werkstücken beladenen Gestell entlang der ersten Gestellschlittenbahn von der ersten Gestellbeladeposition in die erste Gestelltransportposition verfahren,
IV) anschliessend wird das vom Gestellschlitten in der ersten Gestellbeladeposition aufgenommene, mit Werkstücken beladene Gestell auf der Gestelltransportfahrbahn von der ersten Gestelltransportposition weg transportiert,
V) danach wird ein weiteres leeres Gestell, das zur Aufnahme einer Vielzahl der von der Produktionsanlage gefertigten Werkstücke ausgebildet ist, auf der Gestelltransportfahrbahn zur ersten Gestelltransportposition hin transportiert und zusammen mit einem Gestellschlitten, von dem es aufgenommen ist, in der ersten Gestelltransportposition angeordnet, ein zweiter Gestellprozess, der die Schritte umfasst:
VI) ein Gestellschlitten wird mitsamt einem von ihm aufgenommenen leeren Gestell, das zur Aufnahme einer Vielzahl der von der Produktionsanlage gefertigten Werkstücke ausgebildet ist, entlang der zweiten Gestellschlittenbahn von der ersten Gestelltransportposition in die erste Gestellbeladeposition verfahren"
VII) anschliessend wird das vom Gestellschlitten in der zweiten Gestellbeladeposition aufgenommene Gestell mit einer Vielzahl der von der Produktionsanlage gefertigten Werkstücke beladen,
VIII) danach wird der in der zweiten Gestellbeladeposition angeordnete Gestellschlitten mitsamt dem von ihm aufgenommenen, mit Werkstücken beladenen Gestell entlang der zweiten Gestellschlittenbahn von der zweiten Gestellbeladeposition in die zweite Gestelltransportposition verfahren,
IX) anschliessend wird das vom Gestellschlitten in der zweiten Gestellbeladeposition aufgenommene, mit Werkstücken beladene Gestell auf der Gestelltransportfahrbahn von der zweiten Gestelltransportposition weg transportiert,
X) danach wird ein weiteres leeres Gestell, das zur Aufnahme einer Vielzahl der von der Produktionsanlage gefertigten Werkstücke ausgebildet ist, auf der Gestelltransportfahrbahn zur zweiten Gestelltransportposition hin transportiert und zusammen mit einem Gestellschlitten, von dem es aufgenommen ist, in der zweiten Gestelltransportposition angeordnet.

17. Verfahren nach Anspruch 16, **dadurch gekennzeichnet dass** mittels der Gestellschlittenbahnsperrvorrichtung entweder während der Durchführung eines der Schritte IV zum Wegtransportieren eines Gestells von der ersten Gestelltransportposition weg und V zum Hintransportieren eines Gestells zur ersten Gestelltransportposition hin der in der zweiten Gestellbeladeposition angeordnete Gestellschlitten gesperrt wird oder während der Durchführung eines der Schritte IX zum Wegtransportieren eines Gestells von der zweiten Gestelltransportposition weg und X zum Hintransportieren eines Gestells zur zweiten Gestelltransportposition hin der in der ersten Gestellbeladeposition angeordnete Gestellschlitten gesperrt wird.

18. Verfahren nach Anspruch 16 oder 17 für den Betrieb einer Transportanlage nach einem der Ansprüche 13 bis 15, **dadurch gekennzeichnet, dass** zusätzlich die folgenden Gestellprozesse mehrmals und wenigstens teilweise gleichzeitig zum ersten Gestellprozess und zum zweiten Gestellprozess durchgeführt werden:
ein dritter Gestellprozess, der die Schritte umfasst:
XI) ein mit Werkstücken beladenes Gestell, das von einem in der der ersten Gestelltransportposition angeordneten Gestellschlitten aufgenommen ist, wird mittels des ersten Gestelltransportwagens auf der Gestelltransportfahrbahn von der ersten Gestelltransportposition zur dritten Gestelltransportposition hin transportiert und in der dritten Gestelltransportposition zusammen mit einem Gestellschlitten angeordnet, von dem es aufgenommen ist,
XII) danach wird der in der dritten Gestelltransportposition angeordnete Gestellschlitten mitsamt dem von ihm aufgenommenen, mit Werkstücken beladenen Gestell entlang der dritten Gestellschlittenbahn von der dritten Gestelltransportposition in die erste Gestellparkierposition verfahren, ein vierter Gestellprozess, der die Schritte umfasst:
XIII) ein mit Werkstücken beladenes Gestell, das von einem in der der zweiten Gestelltransportposition angeordneten Gestellschlitten aufgenommen ist, wird mittels des ersten Gestelltransportwagens auf der Gestelltransportfahrbahn von der zweiten Gestelltransportposition zur dritten Gestelltransportposition hin transportiert und in der dritten Gestelltransportposition zusammen mit einem Gestellschlitten angeordnet, von dem es aufgenommen ist,
XIV) danach wird der in der dritten Gestelltransportposition angeordnete Gestellschlitten mitsamt dem von ihm aufgenommenen, mit Werkstücken beladenen Gestell entlang der dritten Gestellschlittenbahn von der dritten Gestelltransportposition in die erste Gestellparkierposition verfahren,
wobei der Schritt XI des dritten Gestellprozesses gleichzeitig der Schritt IV des ersten Gestellprozesses ist und der Schritt XIII des vierten Gestellprozesses gleichzeitig der Schritt IX des zweiten Gestellprozesses ist.

19. Verfahren nach Anspruch 18 für den Betrieb einer Transportanlage nach Anspruch 15, **dadurch gekennzeichnet, dass** zusätzlich der folgende fünfte Gestellprozess mehrmals und wenigstens teilweise gleichzeitig zum ersten Gestellprozess und zum zweiten Gestellprozess durchgeführt wird, wobei der fünfte Gestellprozess die Schritte umfasst:
XV) ein in der ersten Gestellparkierposition angeordneter Gestellschlitten wird mitsamt einem von ihm aufgenommenen, mit Werkstücken beladenen Gestell mittels des zweiten Gestelltransportwagens auf der Gestellparkierbahn von der ersten Gestellparkierposition zur zweiten Gestellparkierposition transportiert und in der zweiten Gestellparkierposition angeordnet,
XVI) danach wird das vom Gestellschlitten in der zweiten Gestellparkierposition aufgenommene, mit Werkstücken beladene Gestell vom Gestellschlitten in der zweiten Gestellparkierposition entnommen und weg transportiert,
XVII) anschliessend wird der in der zweiten Gestellparkierposition angeordnete leere Gestellschlitten entlang der vierten Gestellschlittenbahn von der zweiten Gestellparkierposition in die vierte Gestelltransportposition verfahren,
XVIII) danach wird ein leeres Gestell, das zur Aufnahme einer Vielzahl der von der Produktionsanlage gefertigten Werkstücke ausgebildet ist, zur vierten Gestelltransportposition hin transportiert und von dem in der der vierten Gestelltransportposition angeordneten Gestellschlitten aufgenommen,
XIX) anschliessend wird der in der vierten Gestelltransportposition angeordnete Gestellschlitten mitsamt dem von ihm aufgenommenen leeren Gestell mittels des ersten Gestelltransportwagens auf der Gestelltransportfahrbahn von der vierten Gestelltransportposition entweder zur ersten Gestelltransportposition hin transportiert und in der ersten Gestelltransportposition angeordnet oder zur zweiten Gestelltransportposition hin transportiert und in der zweiten Gestelltransportposition angeordnet,
wobei der Schritt XIX des fünften Gestellprozesses gleichzeitig der Schritt V des ersten Kreisprozesses oder der Schritt X des zweiten Kreisprozesses ist.

20. Gestelltransportsteuerungsanlage zur Steuerung einer Transportanlage nach einem der Ansprüche 1 bis 5 oder 9 bis 15, **dadurch gekennzeichnet, dass** die Gestelltransportsteuerungsanlage zur Steuerung der Transportanlage derart ausgebildet ist, dass diese gemäss einem Verfahren nach einem der Ansprüche 6 bis 8 oder 16 bis 19 betrieben wird.

21. Computerprogramm zur Steuerung einer Transportanlage nach einem der Ansprüche 1 bis 5 oder 9 bis 15 derart, dass die Transportanlage automatisch gemäss einem Verfahren nach einem der Ansprüche 6 bis 8 oder 16 bis 19 betrieben wird.
